(19) Europäisches Patentamt
European Patent Office
Office européen des brevets

(11) Veröffentlichungsnummer: **0 252 310 B1**

(12) **EUROPÄISCHE PATENTSCHRIFT**

(45) Veröffentlichungstag der Patentschrift: **29.01.92**

(51) Int. Cl.[5]: **A01N 33/12**, A01N 35/02, A01N 47/44, //(A01N35/02, 33:12),(A01N47/44,33:12)

(21) Anmeldenummer: **87108237.6**

(22) Anmeldetag: **06.06.87**

(54) **Antimikrobielle Mittel.**

(30) Priorität: **12.06.86 DE 3619748**

(43) Veröffentlichungstag der Anmeldung:
**13.01.88 Patentblatt 88/02**

(45) Bekanntmachung des Hinweises auf die Patenterteilung:
**29.01.92 Patentblatt 92/05**

(84) Benannte Vertragsstaaten:
**AT CH DE FR GB LI**

(56) Entgegenhaltungen:
**EP-A- 0 127 131**
**DE-A- 2 008 683**
**DE-A- 3 528 209**
**GB-A- 937 937**

(73) Patentinhaber: **Merz & Co. GmbH & Co.**
**Eckenheimer Landstrasse 100-104**
**W-6000 Frankfurt/M. 1(DE)**

(72) Erfinder: **Thamm, Rüdiger, Dr. Dipl.-Chem.**
**Bornweg 6**
**W-6101 Messel(DE)**

(74) Vertreter: **Wolff, Hans Joachim, Dr.jur. Dipl.-Chem. et al**
**Beil, Wolff & Beil Rechtsanwälte Postfach 80 01 40 Adelonstrasse 58**
**W-6230 Frankfurt am Main 80(DE)**

**EP 0 252 310 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Chemische Stoffe werden bekanntermaßen bereits seit langem als Mittel für Desinfektions-, Sanitations-, Konservierungs- und Sterilisationsverfahren im medizinischen (Klinik, Arztpraxis) und industriellen Bereich (kosmetische, pharmazeutische, technische Chemie, Nahrüngsguterwirtschaft u.a.m.) sowie in öffentlichen Institutionen zur Verhinderung der Übertragung von Krankheitserregern bzw. zur Verhinderung des mikrobiellen Verderbs von Gebrauchsgütern und Naturprodukten sowie zur allgemeinen Hygiene eingesetzt.

Der Erfindung lag die Aufgabe zugrunde, eine Gruppe neuartiger Desinfektionsmittel mit sowohl hervorragenden mikrobiciden Eigenschaften, als auch ausgezeichneten anwendungstechnischen Gebrauchswerten zu entwickeln. An ein modernes chemisches Mittel zur Anwendung in Desinfektions- und Sanitationsverfahren sind nachfolgende Anforderungen zu stellen:

1. Umfassendes mikrobicides Wirkungsspektrum
2. Möglichst geringe Toxizität für Mensch und Umwelt
3. Schnell wirksam in hoher Verdünnung und damit geringstmöglicher Umweltbelastung
4. Biologisch abbaubar bei entsprechendem Verdünnungsgrad
5. Keine Zersetzung und damit keine nachlassende Wirkung
6. Lange Haltbarkeit und Beständigkeit gegenüber Licht (UV-Strahlung) und Luft (Oxidation) sowohl des Konzentrats als auch der Gebrauchslösung
7. Möglichst wenig geruchsbelästigend, also praktisch geruchsfrei
8. Möglichst wasserlöslich mit hohem Netzvermögen
9. Praktisch keinen Eiweiß- und Seifenfehler
10. Möglichst gute Materialverträglichkeit und keine irritierende bzw. allergenisierende Wirkung auf die menschliche Haut
11. Anwenderfreundliche und praxisgerechte Eigenschaften
12. Hohe Wirtschaftlichkeit

Dem Fachmann ist bekannt, daß chemische Stoffe mit mikrobicider Wirkung innerhalb der einzelnen Klassen der Mikroben differenzierte Wirkungsspektren aufweisen. Formaldehyd beispielweise, die z.Zt. wohl als am besten untersucht geltende, biologisch-aktive Substanz, wirkt gegenüber Bakterien, einschließlich Mykobakterien Pilzen, Hefen, Viren und Sporen und kann daher als Breitband-Mikrobicid bezeichnet werden. Nachteilige Eigenschaften des Formaldehyds, wie der stechende Geruch, die Schleimhautreizung sowie das allergenisierende Potential für die menschliche Haut, führten bereits in der Vergangenheit zu der Suche nach "Formaldehyd-Ersatzstoffen".

Besonders die in den letzten Jahren publizierten offiziellen und inoffiziellen Verlautbarungen sowie die anhaltende öffentliche Diskussion über die cancerogenen Eigenschaften und damit einer möglichen Gesundheitsgefährdung durch Formaldehyd und formaldehydhaltigen Erzeugnissen führte zu kritischen bis ablehnenden Haltungen der Verwender gegenüber dem chemischen Grundstoff Formaldehyd.

Bereits bekannte Kombinationen, bestehend aus Formaldehyd, Glyoxal, Acetaldehyd, Glutandialdehyd und/oder ein derartiges Aldehyd- abspaltende Verbindung und einer quartären Ammoniumverbindung, (vgl. DE-PS 20 08 683), versuchten den Ausweg aus den weltweit verbreiteten Desinfektionsmitteln auf Aldehyd-Basis aufzuzeigen. Allerdings zeigte sich auch hier, daß für eine sichere Anwendung dieser Mittel, vornehmlich zur Infektionsprophylaxe bei Verwendung im medizinischen Bereich ein bestimmter Restgehalt an Formaldehyd bzw. Formaldehyd-Abspaltern und/oder Glutaraldehyd im Sinne einer Wirkung gegen humanpathogene Keime wie Tuberkelbakterien oder bestimmte Viren scheinbar unverzichtbar ist. Literaturbekannt ist, daß quartäre Ammoniumverbindungen, Biguanid- und Guanidin-Derivate sowie Glyoxal sog. Wirkungslücken, d.h. ein inkomplettes Wirkungsspektrum gegenüber pathogenen und apathogenen Mikroorganismen, insbesondere gegenüber Mykobakterien und Viren, aufweisen, die die erwünschte universelle Anwendbarkeit einschränken (GB-PS 702 268).

Die FR-A 2 390 100, GB-A 937 937 und die DE-A 3 528 209 offenbaren Mittel der obengenannten Art aus quaternären $NH_4$-Salzen und Guanidin-Derivaten, welche jedoch nicht wirksam bei der Bekämpfung von Hepatitis-Viren und Tuberkulose-Erregern sind. Dabei können die Mittel gemäß der DE-A 3 528 209 zusätzlich Aminoxide und Polyethylenglykol enthalten.

Die EP-A 0 127 131 betrifft baktericide Mittel, enthaltend eine Kombination von Ammoniumverbindungen. Eine besondere tuberkulocide Wirkung ist jedoch nicht offenbart.

Aufgabe vorliegender Erfindung ist es, mikrobicide Mittel bereitzustellen, die frei von Formaldehyd und dessen Abspaltern mit Ausnahme von Glyoxal sind, ein breites antimikrobielles Wirkungsspektrum bzw die eingangs geschilderten Eigenschaften und besonders vorteilhafte oberflächeneigenschaften (nicht haftende oberflächenbeläge) aufweisen.

Diese Aufgabe wird erfindungsgemäß durch die Mittel gemäß Hauptanspruch gelöst. Die Unteranspru-

che betreffen bevorzugte Ausgestaltungen.

Es wurde gefunden, daß die erfindungsgemäßen Mittel, wie sie in den Patentansprüchen gekennzeichnet sind, trotz Freiheit von Formaldehyd bzw. Formaldehyd-Abspaltern sowie Glutardialdehyl mit Ausnahme von Glyoxal ein breites antimikrobielles Wirkungsspektrum haben und insbesondere geeignet sind, Mykobakterium tuberkulosis abzutöten und die Gefahr einer infektiösen Hepatitis weitestgehend auszuschließen. Ferner weisen diese Mittel anwenderfreundliche und praxisgerechte Eigenschaften auf, wie nachstehend noch erläutert wird.

Die erfindungsgemäßen antimikrobiellen Mittel stellen in der praktischen Anwendung wäßrige Lösungen von biologisch-aktiven Wirkstoffen einschließlich erforderlicher Hilfsstoffe dar, die sich durch nachstehende Eigenschaften auszeichnen:

- breites mikrobicides Wirkungsspektrum - bactericid, fungicid, tuberkulocid, virucid
- synergistische Wirkung im Hinblick auf das Wirkungsspektrum (Tb, HBV) und unter Berücksichtigung der relativ geringen Einsatzkonzentrationen an Wirkstoffen,
- Remanenz-Effekt durch Verwendung nichtflüchtiger chemischer Stoffe und deren Einbettung in wasserlösliche, filmbildende Schichten,
- Reduzierung der permanenten Gefahr einer Resistenz-Ausbildung bei Mikrorganismen durch ein Multi-Stoffsystem,
- Aktives Reinigungsvermögen,
- Praxisgerechte Anwendungstechnik im Sinne nicht haftender ("klebender") Oberflächenbeläge.

Die erfindungsgemäßen antimikrobiellen Mittel können als Desinfektions-Sanitations- und Konservierungsmittel in vielen Bereichen und in unterschiedlichen Anwendungsverfahren eingesetzt werden. Beispiele dafür sind die Flächen-, Scheuer- und Sprühdesinfektion von harten und weichen Oberflächen wie Fußböden, Wände, Mobiliar, Inventar, Instrumentarien, Textilien, Krankenhauseinrichtungen, Arztpraxen, Sanitäranlagen, Badeanstalten, Küchenbereiche, Kindergärten, Altenheime, öffentliche Institutionen und Verkehrsmittel, Produktionsanlagen in der Lebensmittel-, Pharma-, Kosmetik- und chemisch-technischen Industrie, sowie Anlagen und Einrichtungen in gewerblichen und landwirtschaftlichen Betrieben. Außerdem können diese germiciden Mittel als Konservierungsstoffe in chemisch-technischen Produkten zu deren Schutz vor mikrobiellem Verderb eingesetzt werden.

Zur näheren Erläuterung der Erfindung dienen die nachstehenden Beispiele, auf welche die Erfindung jedoch nicht beschränkt ist.

## Beispiele

### 1. Zusammensetzung

Die erfindungsgemäßen antimikrobiellen Mittel können beispielsweise folgende Zusammensetzungen aufweisen, aus denen sich durch Verdünnen mit Wasser gebrauchsfertige Desinfektionsmittel herstellen lassen:

Tabelle 1

| Chemischer Stoff | Gew.-% | | | | | |
|---|---|---|---|---|---|---|
| Kombination | A | B | C | D | E | F |
| Glyoxal | 10.0 | 8.0 | - | - | 8.0 | - |
| Oligohexamethylenbiguanid-hydrocnlorid | - | - | 6.0 | 4.0 | - | 4.0 |
| Kokos-propylendiamin-guanidinium-diacetat | - | - | 4.0 | 6.0 | - | 7.0 |
| Kokos-dimethylbenzyl-ammoniumchlorid | 2.0 | 3.0 | 2.5 | 3.0 | 3.0 | 2.0 |
| Kokos-dimethyldichlorbenzyl-ammoniumchlorid | 1.0 | 1.5 | 1.0 | 1.5 | 1.5 | 1.0 |
| Didecylmethyl-polyoxyethylen-ammonium-propionat | 2.0 | 2.0 | 2.5 | 1.5 | 2.0 | 2.0 |
| Polyvinylalkohol | - | 5.0 | - | 5.0 | 5.0 | - |
| Polyvinylpyrrolidon | - | - | 4.0 | - | - | 2.5 |
| Polyvinylacetat | 4.0 | - | - | - | - | 2.5 |
| Mischpolymerisat(Acrolein/Formaldehyd) | 3.0 | 4.0 | - | - | 2.0 | - |
| Glutardialdehydtetramethylacetal | 2.0 | - | - | - | 1.0 | - |
| Kokos-dimethyl-aminoxid | 1.0 | 1.5 | 2.0 | 1.5 | 1.5 | 1.5 |
| Kokos-amidopropyldimethyl-aminoxid | 1.5 | 2.5 | 1.0 | 1.5 | 2.5 | 1.5 |
| Isotridecyl-alkoholpolyglykolether | 5.0 | 4.0 | 5.0 | 4.0 | 4.0 | 5.0 |
| Wasser | ad 100,0 | | | | | |

Die Untersuchung der mikrobiologischen Wirksamkeit der erfindungsgemäßen Formulierungen wurde entsprechend den "Richtlinien für die Prüfung und Bewertung chemischer Desinfektionsverfahren" der Deutschen Gesellschaft für Hygiene und Mikrobiologie (Stand: 01.01.1981) unter Berücksichtigung der Anforderungen für die Aufnahme in die VII.Desinfektionsmittel-Liste der DGHM (Stand. 01.02.1984) durchgeführt [Hygiene und Medizin 2, 41 (1984)].

2. Bakericide und fungicide Wirkung im qualitativen Suspensionsversuch

Tabelle 2

| Erfindungsgemäßes Mittel | | Abtötungszeit in Abhängigkeit von der Konzentration | | | | | | | | | | | |
|---|---|---|---|---|---|---|---|---|---|---|---|---|---|
| | Testkeim | S.aureus | | E.coli | | P.mirabilis | | P.aeruginosa | | C.albicans | | M.tuberkulosis | |
| | Zeit in Minuten | 15' | 60' | 15' | 60' | 15' | 60' | 15' | 60' | 15' | 60' | 30' | 60' |
| Kombination B | Konzentration in % | 0.05 | 0.01 | 0.05 | 0.05 | 0.10 | 0.10 | 0.25 | 0.25 | 0.05 | 0.05 | 1.0 | 0.50 |
| Kombination D | | 0.10 | 0.01 | 0.05 | 0.05 | 0.10 | 0.05 | 0.10 | 0.05 | 0.01 | 0.005 | >10.0 | 10.0 |
| Kombination VP 1* | | 0.50 | 0.10 | 0.25 | 0.10 | 0.25 | 0.10 | 1.00 | 0.75 | 0.10 | 0.10 | - | - |
| Kombination VP 2* | | 1.00 | 0.10 | 0.25 | 0.10 | 0.25 | 0.10 | 0.25 | 0.10 | 0.50 | 0.25 | - | - |

* VP 1 = Vergleichspräparat, Kombination aus
8.0 g Glyoxal
6.5 g Didecyl-dimethyl-ammoniumchlorid als quartäre Ammoniumverbindung
8.0 g Nonylphenolpolyglykolether
10.0 g Isopropanol
Wasser ad 100.0 g, entspricht annähernd handelsüblicher Präparation

* VP 2 = Vergleichspräparat, Kombination aus
10.0 g Oligohexamethylen-biguanid-hydrochlorid
6.0 g Didecyl-dimethyl-ammoniumchlorid als quartäre Ammoniumverbindung
7.0 g Nonylphenolpolyglykolether
10.0 g Isopropanol
Wasser ad 100.0 g, entspricht annähernd handelsüblicher Präparation

3. Tuberkulocide Wirkung im Keimträgerversuch

Tabelle 3

| Erfindungsgemäßes Mittel | | Abtötungszeit in Minuten Testkeim: M.tuberkulosis | | |
|---|---|---|---|---|
| | | 30' | 60' | 120' |
| Kombination B | Konzentration in % | 1.50 | 1.00 | 0.50 |
| Kombination D | | >25.0 | 20.00 | 10.00 |

Anhand der tabellarischen Übersicht ist deutlich erkennbar, daß die erfindungsgemäßen antimikrobiellen Mittel ein sehr viel breiteres Wirkungsspektrum bei hervorragender Wirksamkeit auch in sehr geringen Einsatzkonzentrationen aufweisen. Diese Mittel zeigen also insgesamt ein besseres Ergebnis als die jeweiligen Einzelkomponenten bzw. die überprüften Vergleichspräparationen. Die ausgezeichneten Prüfresultate der erfindungsgemäßen Formulierungen sind nur im Sinne einer tatsächlichen synergistischen Wirkung zu interpretieren.

Eine der häufigsten und schwerwiegendsten Berufserkrankungen des Personals im medizinischen Bereich ist die Hepatitis-B. Im Rahmen einer Hepatitis-Prophylaxe sollten neben rein organisatorischen Maßnahmen beim Umgang mit möglichem infektiösen Material (Blut) der Immunisierung (Hepatitis-B-Impfung) und der Desinfektion eine erhebliche Bedeutung bei der Infektionsverhütung eingeräumt werden. Über die Problematik der Prüfung von Desinfektionsmitteln gegenüber Viren, insbesondere HBV, ist in der Literatur ausführlich berichtet worden [z.B. Kuwert, Hygiene und Medizin, 9, 391 (1984)].

Die HBV-Wirksamkeit der erfindungsgemäßen antimikrobiellen Mittel wurde im Antigen-Inaktivierungstest (Radioimmuntest, Prüfung der Zerstörung der immunologischen Reaktivität von HBsAg) in Anlehnung an die "Richtlinien des Bundesgesundheitsamtes und der Deutschen Vereinigung zur Bekämpfung der Virkuskrankheiten zur Prüfung von chemischen Desinfektionsmitteln auf Wirksamkeit gegen Viren" in der Fassung vom 01.09.1982 [Bundesgesundheitsblatt 25, 397 (1982)] nachgewiesen.

4. Hepato-virucide Wirkung

Tabelle 4

| HBV-Wirksamkeit im Antigen-Inaktivierungstest (Suspensionsversuch) | | | |
|---|---|---|---|
| Erfindungsgemäßes Mittel | Konzentration in % | Antigen-Inaktivierung (Zerstörung der Antigenität d. HBsAg) in Minuten | Ermittelte Restaktivität (Nachweis der Ausgangsmenge d. HBsAg) in % |
| Kombination B | 1.0 | 240 | 8 |
| | 2.0 | 120 | 0 |
| | 3.0 | 60 | 0 |
| | 4.0 | 30 | 0 |
| | 5.0 | 30 | 0 |
| Kombination D | 1.0 | 240 | 16 |
| | 2.0 | 240 | 12 |
| | 3.0 | 240 | 5 |
| | 4.0 | 60 | 0 |
| | 5.0 | 30 | 0 |
| Kombination VP 1 | 5.0 | 240 | 51 |
| Kombination VP 2 | 5.0 | 240 | 66 |

In neuerer Zeit kommt dem Problem der Inaktivierung von HTLV-III/LAV (Wirksamkeit gegenüber dem AIDS-Erreger) immense Bedeutung zu. Wegen der strukturellen (Lipoprotein-Hülle) und weiteren biologischen Ähnlichkeiten zwischen HBV und HTLV-II kann - wie inzwischen angestellte Untersuchungen gezeigt haben - bei nachgewiesener HBV-zerstörender Wirkung eines Desinfektionsmittels davon ausgegangen werden, daß dieses Mittel unter gleichen Bedingungen das labilere HTLV-III inaktiviert.

Wie bereits erwähnt, verfügen Desinfektionsmittel auf der bekannten Basis von Formaldehyd und/oder Glutardialdehyd über ein sehr breites antimikrobielles Wirkungsspektrum, zeigen aber wegen der Flüchtigkeit und der hohen Reaktivität der Carbonylgruppen keine anhaltende Nachwirkung. In der DE-PS 1 269 292 ist die Wirkungssteigerung von Formaldehyd durch eine Kombination mit metallorganischen Verbindungen beschrieben worden, die wegen nachteiliger Eigenschaften und heute insbesondere wegen ökologischer Belange nicht als optimale Lösung gelten kann.

Über weitere Versuche mit dem Ziel eine desinfektorische Langzeitwirkung zu erreichen, wurde in der DE-OS 2 611 957 berichtet.

Die Verwendung von wasserlöslichen Polymeren in den erfindungsgemäßen antimikrobiellen Mitteln führt zu einer glatten und relativ festen Filmbildung auf harten Oberflächen, die normalen, praxisüblichen mechanischen Beanspruchungen standhalten, in die die nichtflüchtigen Biocide eingebettet sind. Dadurch ist insbesondere wegen der leichten Wasserlöslichkeit der Oberflächenfilme ein ausgeprägter Remanenz-Effekt nachzuweisen, der auf behandelten Flächen oder Gegenständen eine erneute Besiedelung und ein Wachstum von Keimen verhindert. Geeignete Polymere sind z.B. Polyvinylacetat, Polyvinylpyrrolidon, Polyacrylsäure, Polymethacrylsäure und insbesondere Polyvinylalkohol und ein Mischpolymerisat aus Acrolein/Formaldehyd der Formel wie Anspruch 4.
Das Mischpolymerisat aus Acrolein/Formaldehyd besitzt außerdem eine nachweisbare eigene mikrobistatische Wirkung und vermag über längere Zeiträume eine mikrobicide Wirkung zu entfalten.

Bei entsprechenden Formulierungen der erfindungsgemäßen Mittel führt der Einsatz geringer Mengen von Acetalen zu einer überraschenderweise den praktischen Erfordernissen entsprechenden Härtung der Oberflächenfilme. Als geeignete Acetale kommen z.B. in Betracht: Glyoxal-tetramethylacetal, Malon-tetramethylacetal und Glutaraldehyd-tetramethylacetal.

Zur Prüfung der Langzeitwirkung wurde folgende Methodik gewählt:
Eine Kunststoffplatte mit entsprechenden Vertiefungen wurde nach sorgfältiger Reinigung mit den Gebrauchslösungen der erfindungsgemäßen antimikrobiellen Mittel desinfiziert. Danach werden die Bodenflächen der Vertiefungen mit den wäßrigen Lösungen der erfindungsgemäßen Kombinationen beschichtet. Nach Verdunsten des Lösungsmittels Wasser wurden die Vertiefungen nach 6, 12 und 24 Stunden mit einer Testkeimsuspension und Nährbouillon (zur Mischpopulation wurden die Keime E.coli, P.aeruginosa und S.aureus zusammengefaßt), kontaminiert und überschichtet. Nach einstündiger Einwirkungsdauer wurden jeweils Proben der resultierenden Lösung entnommen und die Anzahl der vermehrungsfähigen Keime kulturell im Gußplattenverfahren auf Nähr-Agar bestimmt. Zum Vergleich wurden diese Versuche mit einer 0,7%igen wäßrigen Formaldehyd-Lösung parallel ausgeführt.
Im Falle der Verwendung der erfindungsgemäßen antimikrobiellen Formulierungen, zeigten die Versuche, daß sich die Testkeime nicht vermehren konnten, sondern durch die erhaltene mikrobicide Wirkung dieser Mittel abgetötet worden sind. Der Kontrollversuch mit Formaldehyd-Lösung hingegen zeigte deutliches Keimwachstum.
Entsprechend diesen Versuchsergebnissen ist das Absterben der Keime somit nicht auf eine natürliche Absterberate, sondern auf die Remanenzwirkung der erfindungsgemäßen Mittel zurückzuführen.

Aus wirtschaftlichen Gründen ist heute die mit Desinfektionsaufgaben betraute Person/Institution in aller Regel bestrebt, den Desinfektionsvorgang mit einer gleichzeitigen Reinigung zu verbinden und damit die Reinigung und Desinfektion in einem Arbeitsgang zu bewerkstelligen. Seit Jahrzehnten ist es Usus, daß Desinfektionsmittel mit Sachkompetenz bezüglich ihrer mikrobiciden Wirksamkeit geprüft werden und in amtlichen Desinfektionsmittel-Listen geführt werden. Eine Beurteilung der oberflächen-/grenzflächenaktiven Eigenschaften, des Netzvermögens u.a. physikalisch-chemischer Parameter einschließlich der Reinigungswirkung wird mangels geeigneter Verfahren, Prüfrichtlinien und festzulegender Tenside als Standard-Substanzen nicht ausgeführt. Der allgemeinen Erfahrung zufolge wird bei der Kombination von Reinigung und Desinfektion nur in wenigen Fällen eine ausreichende Reinigungswirkung erzielt, da in den üblichen Anwendungskonzentrationen dieser Mittel grenzflächenaktive Eigenschaften durch Unterdosierung von Tensiden nicht in optimaler Weise erreicht werden können.

Die in den erfindungsgemäßen antimikrobiellen Mitteln gemäß den Ansprüchen enthaltene Kombination von Aminoxiden und oxethyliertem Fettalkohol erwiesen sich im laboratoriumsmäßigen Modellversuch und unter Praxisbedingungen im Routine-Betrieb als bemerkenswert reinigungsaktiv und zeigen damit einen

weiteren wesentlichen Vorteil dieser Mittel auf. Geeignete Aminoxide sind insbesondere solche, in denen der Alkylrest $R_1$ gemäss Patentanspruch [1]einen Kokos-, Lauryl- oder Myristilrest bedeutet.

Die Untersuchung der Reinigungswirkung der erfindungsgemäßen antimikrobiellen Mittel wurde laboratoriumsmäßig an mit Testschmutz beschichteten Kunststoff-Oberflächen im Wischverfahren ausgeführt. Als Referenz-Substanz wurde im Rahmen dieser Versuche der oberflächenaktive Stoff Natriumdioctylsulfosuccinat gewählt, der bekanntermaßen über ausgezeichnete grenzflächenaktive Eigenschaften, wie Netzvermögen und Absenken der Oberflächenspannung des Wassers, verfügt. Die Konzentration der wäßrigen Gebrauchslösungen der erfindungsgemäßen Mittel wurde so gewählt, daß diese Lösungen in 1000 ml 1 g waschaktive Substanzen enthielten; der Vergleichbarkeit wegen wurde ebenfalls eine wäßrige Lösung von Natriumdioctylsulfosuccinat mit 1g WAS/l hergestellt und als Referenz für diesen Versuch benutzt.
Im Ergebnis dieser Untersuchungen zeigten die wäßrigen Lösungen der erfindungsgemäßen antimikrobiellen Mittel sowohl gegenüber Fett/Öl-Anschmutzungen als auch gegenüber Pigment-Verschmutzungen ein gleich gutes Reinigungsvermögen wie die benutzte Referenz-Substanz. Versuche unter Praxisbedingungen, Flächendesinfektion von PVC-Fußböden im Krankenhaus, zeigten eine analog hohe Reinigungswirkung bei vollständiger Benetzung der Bodenflächen und hinterließen nach dem Abtrocknen einen optisch glänzenden Fußboden und empfehlen damit die erfindungsgemäßen antimikrobiellen Mittel zur Verwendung als Flächendesinfektionsmittel mit gleichzeitiger Reinigung.

Quartäre Ammonium-Verbindungen, Diguanidin-Derivate und üblicherweise in Desinfektionsmitteln eingesetzte nichtionische Tenside vom Typ der oxethylierten/propoxylierten Fettalkohole, Alkylphenole, Alkylcyclohexanole, Fettsäuren, Fettamine und Fettsäureamide stellen in Reinsubstanz (lösungsmittelfrei) hochviskose Flüssigkeiten bis wachs-/harzartige, amorphe Festkörper dar. Wegen dieser Konsistenz und der adsorptiven Eigenschaften, besonders der kationischen Tenside, kann nach Anwendung von Desinfektionsmitteln zur Flächen-/Scheuerdesinfektion, basierend auf der Kombination quartäre Ammonium-Verbindung/Nonionic, in Abhängigkeit vom Fußboden-Belag, der eventuellen Beschichtung und unter Berücksichtigung von Pflegemaßnahmen nach Verdunsten der Lösungsmittel, vornehmlich Wasser, ein zähviskoser, harzartiger und damit klebriger Belag auf glatten Oberflächen resultieren. Dieser sog. "Klebe-Effekt" (vgl. J.Rödger, Medita, 11 (1981)) der sich unter ungünstigen Umständen aufgrund eigener Versuche und Erfahrungen bis zur Rutschgefahr für den Verwender ausweiten kann, ist ein erheblicher anwendungstechnischer Nachteil derartiger Mittel.

Die erfindungsgemäßen antimikrobiellen Mittel zeigen infolge einer geeigneten Galenik, insbesondere durch den Einsatz filmbildender Polymere sowie die Verwendung von Aminoxid-Tensiden selbst bei hoher relativer Luftfeuchtigkeit keine "Klebe-Eigenschaften". Erst oberhalb einer relativen Luftfeuchtigkeit von 80% verlieren die Oberflächenfilme ihre physikalische Festigkeit.

Zur Überprüfung der Oberflächeneigenschaften der erfindungsgemäßen antimikrobiellen Mittel wurden Untersuchungen mittels physikalischer Methoden ausgeführt. Als Basis-Material für diese Messungen wurden PVC-Plättchen 5x5cm, Qualität compact, Stärke 2,0 mm (Hersteller: DLW Aktiengesellschaft, 7120 Bietigheim-Bissingen) benutzt, die üblicherweise für die gutachterliche Prüfung von Flächendesinfektionsmitteln unter praxisnahen Bedingungen entsprechend den Richtlinien der DGHM verwendet werden. Außerdem wurden für weitere Untersuchungen handelsübliche PVC-Fußbodenbeläge eingesetzt.

Probenvorbereitung:

Gegenüber der normalen Anwendung wurden zur Probenherstellung hier wäßrige Lösungen der erfindungsgemäßen Formulierungen und vergleichbarer handelsüblicher Produkte erhöhter Konzentration, 10%ig, auf die PVC-Stücke aufgetragen und gleichmäßig verteilt (0,02 ml/$cm^2$), um die bei wiederholter Anwendung nach Verdunsten des Wassers vorhandenen Beschichtungsmengen zu erreichen. Die auf diese Weise hergestellten Prüfmuster zeigten nach Lagerung von 24 h bis 48 h im Normalklima (DIN 50014-23/50-2, 23 °C, 50% relative Luftfeuchtigkeit) vom Augenschein her eine weitestgehend gleichmäßige Beschichtung und bereits von der "Griffigkeit" her deutliche Unterschiede.

Prüfung auf Haftung ("Klebe-Effekt") im Abziehverfahren

Aus den, wie oben beschrieben, hergestellten Prüfmustern wurden Probestücke von 44,5 mm Durchmesser ausgestanzt und diese auf metallische Halterungen von 50 mm Durchmesser zentrisch aufgeklebt. Je 2 gleichartig beschichtete Probestücke wurden dann wie folgt zusammengepreßt:
Anstieg der Anpreßkraft auf 500 N innerhalb 10 sec.
Halten der Anpreßkraft auf 500N über eine Zeit von 10 sec.
Entlastung innerhalb von 10 sec.

(Anmerkung: Die Anpreßkraft von 500 N auf die Kontaktfläche von 44,5 mm Durchmesser entspricht im Mittel angenähert der Belastung eines normalen Schuhabsatzes auf dem Fußboden.)

Zur Beurteilung der sich durch die Beschichtung ergebenden "Klebe-Effekte" wurden deshalb je 2 gleichartig beschichtete Kontaktflächen verwendet, weil im Anwendungsfall beim Begehen von Fußbodenflächen stets damit zu rechnen ist, daß sich auf den Sohlen des Schunhwerks Schichten aus dem jeweiligen Desinfektionsmittel in merklicher Menge anlagern können

Unmittelbar nach dem Zusammenpressen der Kontaktflächen wurde die zum Auftrennen der Fläche benötigte Kraft mit Hilfe einer Zugprüfmaschine ermittelt.

Ermittlung der Haftkraft

Tabelle

| Erfindungsgemäßes Mittel | Haftkraft in N* auf einer Fläche von 44,5 mm Ø | |
|---|---|---|
| | Einzelwerte von - bis | arithmetischer Mittelwert |
| Kombination B | < 0,1 - 0,2 | 0,1 |
| Kombination D | < 0,1 - 1,1 | 0,3 |
| Kombination E | < 0,1 - 0,4 | 0,1 |
| VP 1 | 2,8 - 23,8 | 10,7 |
| VP 2 | 1,2 - 11,0 | 3,8 |
| Handelspräparat 1) | 1,8 - 17,5 | 8,7 |

* = Der Streubereich der Werte resultiert aus der nicht idealen Oberflächenbeschaffenheit (Feinstruktur) des PVC-Belags

1) VI.Liste der DGHM

Anhand der tabellarischen Zusammenstellung der Meßwerte der Haftkraft ergibt sich zwanglos die Überlegenheit der erfindungsgemäßen Mittel gegeüber herkömmlichen Präparationen.

Ermittlung der Horizontalkräfte infolge Haftreibung bei rollendem Kontakt auf beschichtetem PVC-Fußbodenbelag

Für diesen Prüfzweck wurden PVC-Platten auf 163mm Länge und 50mm Breite mit 0,2 ml/cm$^2$ oben beschriebener wäßriger Desinfektionsmittel-Lösungen beschichtet. Im Sinne einer Simulation der Abrollbewegung des mit Schuhwerk bekleideten menschlichen Fußes auf Fußbodenbelägen wurden mit einem 5 kg schweren Rollkörper und einer Abrollgeschwindigkeit von 1 mm/sec. die in nachstehender Tabelle aufgeführten Horizontalkräfte gemessen.

Tabelle

| Erfingungsgemäße Mittel | Horizontalkraft in N infolge Reibung Mittelwerte | | Differenz B - A durch Haftreibung |
|---|---|---|---|
| | A nicht beschichtet | B beschichtet | |
| Kombination B | 0,51 | 0,53 | 0,02 |
| Kombination D | 0,54 | 0,59 | 0,05 |
| Kombination E | 0,53 | 0,56 | 0,03 |
| VP 1 | 0,48 | 0,72 | 0,24 |
| VP 2 | 0,57 | 0,72 | 0,15 |
| Handelspräparat | 1) 0,51 | 0,71 | 0,20 |

1) VI. Liste der DGHM

Entsprechend diesen physikalischen Meßwerten ist eine deutlich geringere Haftreibung bei Verwendung der erfindungsgemäßen antimikrobiellen Mittel im Vergleich zu üblichen Desinfektionsmitteln festzustellen.

Unter Praxisbedingungen ausgeführte Flächendesinfektions-Versuche in Kliniken hatten zum Ergebnis, daß die erfindungsgemäßen Mittel unter diesen anwendungstechnischen Gesichtspunkten sehr positive Eigenschaften aufweisen - keine Rutschgefahr sowohl auf noch feuchtem Boden als auch im halbtrockenen Zustand, kein "Klebe-Effekt", insbesondere auch beim Begehen der Flächen mit Gummischuhen nach dem Trocknen.

Bekannt ist das Phänomen der sog.
Desinfektionsmittel-Resistenz von bestimmten Keimen, insbesondere dann, wenn Desinfektionsmittel nur einen Wirkstoff enthalten [K.H. Wallhäußer, Praxis der Sterilisation - Desinfektion - Konservierung, 3.Aufl., 1984, S.134,305] . Die erfindungsgemäßen Mittel sind Kombinationen verschiedener Wirkstoffe, die unterschiedlichen chemischen Stoffklassen angehören und aus diesem Grund die Gefahr der Ausbildung resistenter Keime verhindern bzw. minimieren.

Neben den bereits angeführten Wirk- und Hilfsstoffen können die erfindungsgemäßen antimikrobiellen Mittel übliche Zusätze nachstehender chemischer Stoffe enthalten:
Hautschutzstoffe, Korrosionsinhibitoren, Kältestabilisatoren, Lösungsvermittler, pH-Regulans, Salze, Entschäumer, Farbstoffe, Parfümöle, Enzyme u.a..

Die erfindungsgemäßen antimikrobiellen Mittel verfügen über eine hohe Stabilität und Beständigkeit. Unverträglichkeitserscheinungen und Änderungen der chemisch-physikalischen Konstanten einschließlich eine Abnahme der Wirksamkeit sind auch nach längeren Lagerzeiten unter Variation der Temperatureinflüsse nicht festzustellen.

## Patentansprüche

1. Formaldehyd- bzw. Formaldehyd-Abspalter-freie und Glutardialdehyd-freie mit Ausnahme von Glyoxal antimikrobielle Mittel auf der Basis bekannter Biozide und einer Kombination quartärer Ammoniumverbindungen, dadurch gekennzeichnet, daß sie quartäre Ammoniumsalze der allgemeinen Formel

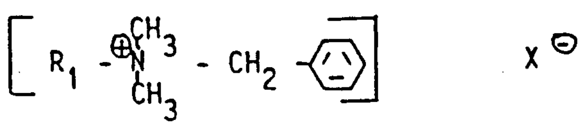

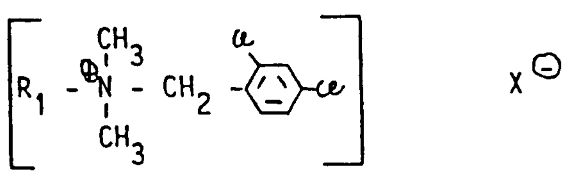

und

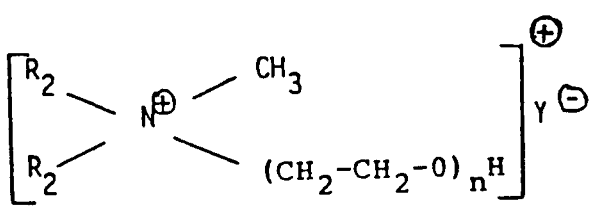

n = 1-5

enthalten, wobei $R_1$ einen Alkylrest mit geradzahliger Kohlenwasserstoffkette von 12 bis 18 C-Atomen, $R_2$ einen Alkylrest mit 10 C-Atomen, $X^-$ einen anorganischen Säurerest und $Y^-$ einen organischen Säurerest darstellt, und die Mittel zusätzlich Kombinationen von Aminoxiden der allgemeinen Formeln

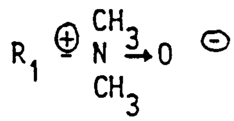

und/oder

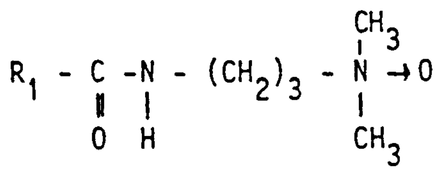

mit Fettalkoholpolyglykolethern der allgemeinen Formel

$R_2 - CH_2 - O(CH_2CH_2O)_nH \quad n = 5 - 15$

enthalten, wobei $R_1$ einen Alkylrest mit geradzahliger Kohlenwasserstoffkette von 12 bis 18 C-Atomen, $R_2$ einen iso-Alkylrest mit 13 C-Atomen darstellt und n die Anzahl der am Fettalkohol angelagerten Moleküle Ethylenoxid angibt und einen Gehalt an Polymeren aufweisen.

2. Antimikrobielle Mittel nach Anspruch 1, dadurch gekennzeichnet, daß das bekannte Biozid Ethandial (Glyoxal) ist.

3. Antimikrobielle Mittel nach Anspruch 1, dadurch gekennzeichnet, daß die bekannten Biozide Biguanid-Verbindungen und/oder Diguanidin-Derivate der allgemeinen Formeln:

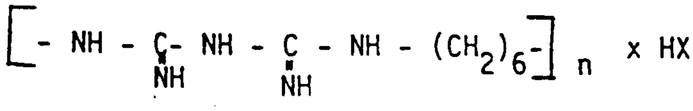

n = 4-6

bzw.

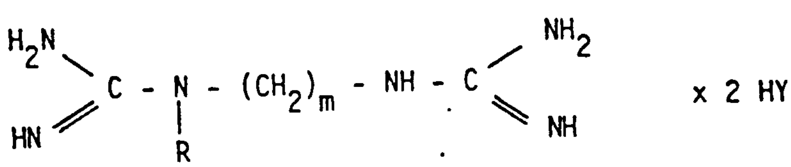

m = 2-6

sind, wobei R ein Alkylrest mit geradzahliger Kohlenwasserstoffkette von 12 bis 18 C-Atomen, HX eine anorganische Säure und HY eine organische Säure ist.

4. Antimikrobielle Mittel nach Anspruch 1 bis 3, dadurch gekennzeichnet, daß das Polymere ein Mischpolymerisat aus Acrolein/Formaldehyd der allgemeinen Formel

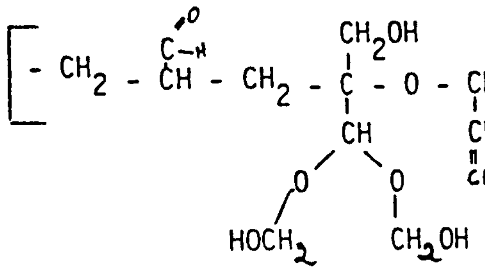

ist.

5. Antimikrobielle Mittel nach Ansprüchen 1 bis 4, gekennzeichnet durch einen zusätzlichen Gehalt an Acetalen, insbesondere Dialdehyd-tetramethylacetal, der allgemeinen Formel

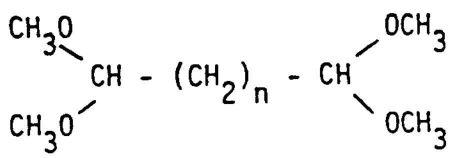

$n = 1-3$

**Patentansprüche für folgenden Vertragsstaat : AT**

1. Verfahren zur Herstellung von antimikrobiellen Mitteln auf der Basis bekannter Biozide und einer Kombination quartärer Ammoniumverbindungen, die frei sind von Formaldehyd bzw. Formaldehyd-Abspaltern und Glutardialdehyd mit Ausnahme von Glyoxal, dadurch gekennzeichnet, daß man der Mischung aus den vorstehend genannten Komponenten als quaternäre Ammoniumverbindungen Ammoniumsalze der allgemeinen Formeln

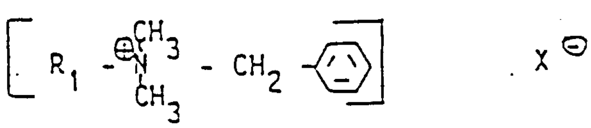

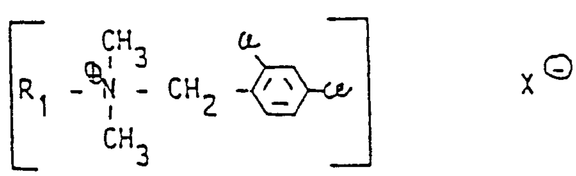

und

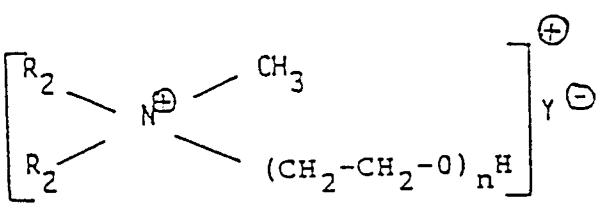

$n = 1-5$

hinzufügt, wobei $R_1$ einen Alkylrest mit geradzahliger Kohlenwasserstoffkette von 12 bis 18 C-Atomen, $R_2$ einen Alkylrest mit 10 C-Atomen, $X^-$ einen anorganischen Säurerest und $Y^-$ einen organischen

Säurerest darstellt, und den Mitteln zusätzlich Kombinationen von Aminoxiden der allgemeinen Formeln

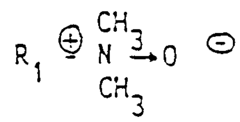

und/oder

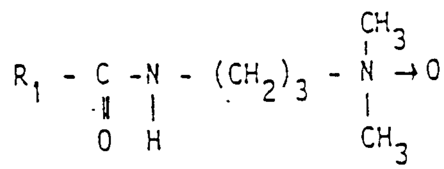

mit Fettalkoholpolyglykolethern der allgemeinen Formel

$R_2 - CH_2 - O(CH_2CH_2O)_nH \quad n = 5 - 15$

zugefügt werden, wobei $R_1$ einen Alkylrest mit geradzahliger Kohlenwasserstoffkette von 12 bis 18 C-Atomen, $R_2$ einen iso-Alkylrest mit 13 C-Atomen darstellt und n die Anzahl der am Fettalkohol angelagerten Moleküle Ethylenoxid angibt, und weiterhin ein Gehalt an Polymeren und gegebenenfalls Wasser zugesetzt wird.

**2.** Verfahren gemäß Anspruch 1, dadurch gekennzeichnet, daß man als bekanntes Biozid Ethandiol (Glyoxal) verwendet.

**3.** Verfahren gemäß Anspruch 1, dadurch gekennzeichnet, daß man als bekannte Biozide Biguanid-Verbindungen und/oder Diguanidin-Derivate der allgemeinen Formeln:

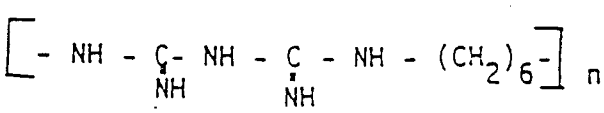 x HX

$n = 4-6$

bzw.

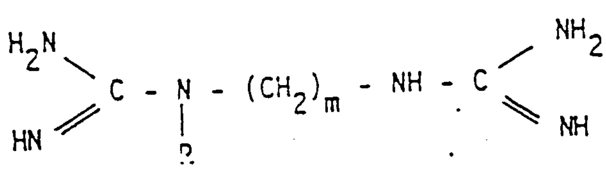 x 2 HY

$m = 2-6$

verwendet, wobei R ein Alkylrest mit geradzahliger Kohlenwasserstoffkette von 12 bis 18 C-Atomen, HX eine anorganische Säure und HY eine organische Säure ist.

**4.** Verfahren gemäß einem der Ansprüche 1 bis 3, dadurch gekennzeichnet, daß man als Polymer ein Mischpolymerisat aus Acrolein/Formaldehyd der allgemeinen Formel

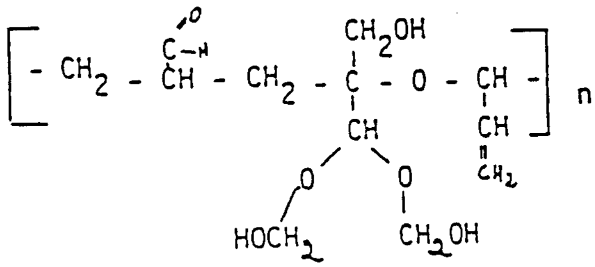

einsetzt.

5. Verfahren gemäß einem der Ansprüche 1 bis 4, dadurch gekennzeichnet, daß man der Zusammensetzung einen zusätzlichen Gehalt an Acetalen, insbesondere Dialdehyd-tetramethylacetal, der allgemeinen Formel

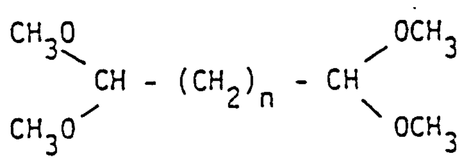

n = 1-3

hinzufügt.

**Claims**

1. Antimicrobial agents based on known biocides and a combination of quaternary ammonium compounds and free from formaldehyde and formaldehyde donors and from glutaric dialdehyde with the exception of glyoxal, characterised in that they contain quaternary ammonium salts Corresponding to the following general formulae

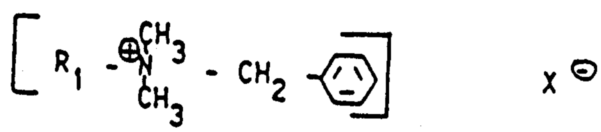

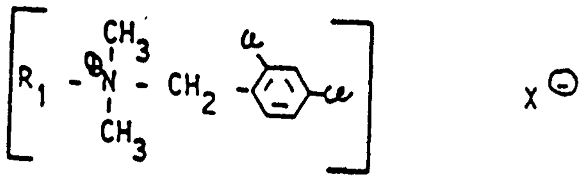

and

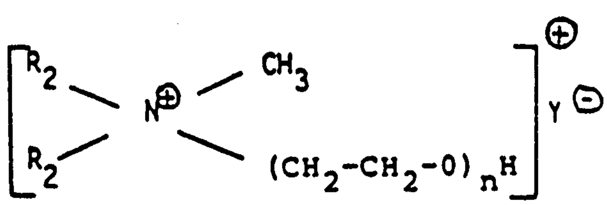

n = 1-5

wherein $R_1$ denotes an alkyl group having an even numbered hydrocarbon chain with 12 to 18 carbon

atoms, $R_2$ denotes an alkyl group having 10 carbon atoms, $X^-$ denotes an inorganic acid group and $Y^-$ an organic acid group and the agents in addition contain combinations of aminoxides corresponding to the following general formulae

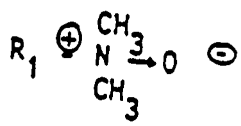

and/or

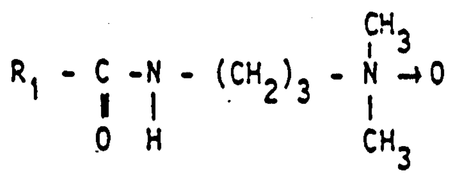

with fatty alcohol polyglycol ethers corresponding to the following general formula

$R_2 - CH_2 - O(CH_2CH_2O)_nH$      $n = 5 - 15$

wherein $R_1$ denotes an alkyl group having an even numbered hydrocarbon chain with 12 to 18 carbon atoms, $R_2$ denotes an isoalkyl group having 13 carbon atoms and n denotes the number of molecules of ethylene oxide attached to the fatty alcohol, and the agents contain polymers.

2. Antimicrobial agents according to Claim 1, characterised in that the known biocide is ethanedial (glyoxal).

3. Antimicrobial agents according to Claim 1, characterised in that the known biocides are biguanide compounds and/or diguanidine derivatives corresponding to the following general formulae:

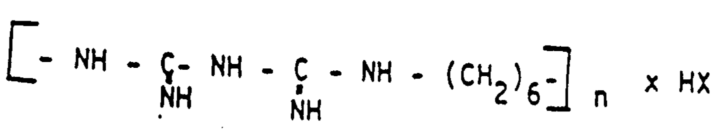

n = 4-6

or

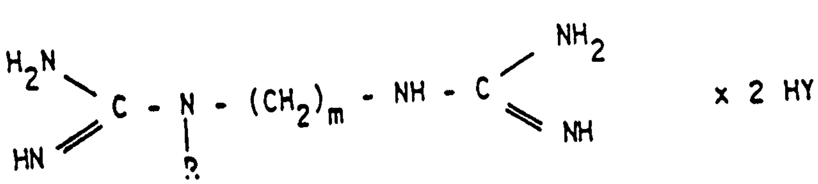

m = 2-6

wherein R denotes an alkyl group having an even numbered hydrocarbon chain with 12 to 18 carbon atoms, HX denotes an inorganic acid and HY denotes an organic acid.

4. Antimicrobial agents according to Claims 1 to 3, characterised in that the polymer is a copolymer of acrolein/formaldehyde corresponding to the following general formula

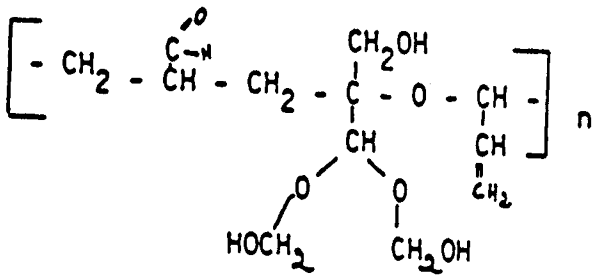

5. Antimicrobial agents according to Claims 1 to 4, characterised by in addition containing acetals, in particular dialdehyde-tetramethylacetal corresponding to the following general formula

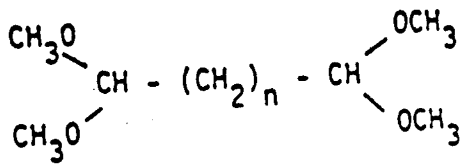

n = 1-3

**Claims for the following Contracting State : AT**

1. Process for the preparation of antimicrobial agents based on known biocides and a combination of quaternary ammonium compounds which are free from formaldehyde and formaldehyde donors and from glutaric dialdehyde with the exception of glyoxal, characterised in that the quaternary ammonium compounds added to the mixture of the above-mentioned components are ammonium salts corresponding to the following general formulae

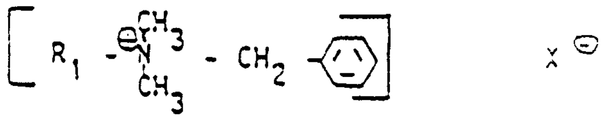

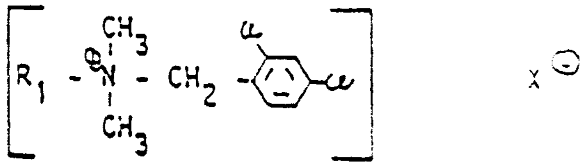

and

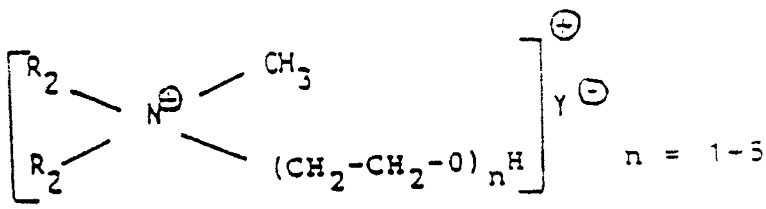

wherein $R_1$ denotes an alkyl group having an even numbered hydrocarbon chain with 12 to 18 carbon atoms, $R_2$ denotes an alkyl group having 10 carbon atoms, $X^-$ denotes an inorganic acid group and $Y^-$ denotes an organic acid group, and in addition, combinations of aminoxides corresponding to the following general formulae

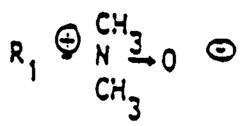

and/or

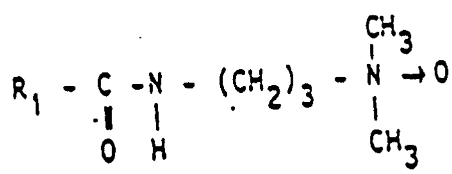

with fatty alcohol polyglycol ethers corresponding to the following general formula

$R_2 - CH_2 - O(CH_2CH_2O)_nH$ $n = 5 - 15$

are added to the agents, $R_1$ denoting an alkyl group having an even numbered hydrocarbon chain with 12 to 18 carbon atoms, $R_2$ denotes an isoalkyl group having 13 carbon atoms and n denotes the number of molecules of ethylene oxide attached to the fatty alcohol, and in addition polymers and optionally water are added.

**2.** Process according to Claim 1, characterised in that the known biocide used is ethanediol (glyoxal).

3. Process according to Claim 1, characterised in that the known biocides used are biguanide compounds and/or diguanidine derivatives corresponding to the following general formulae:

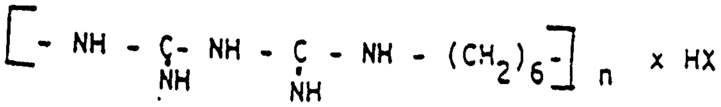

n = 4-6

or

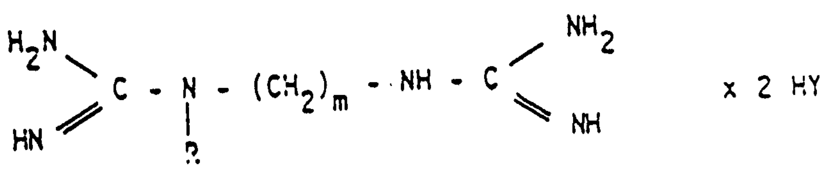

m = 2-6

wherein R denotes an alkyl group having an even numbered hydrocarbon chain with 12 to 18 carbon atoms, HX denotes an inorganic acid and HY denotes an organic acid.

4. Process according to one of the Claims 1 to 3, characterised in that the polymer used is a copolymer of acrolein/formaldehyde corresponding to the following general formula

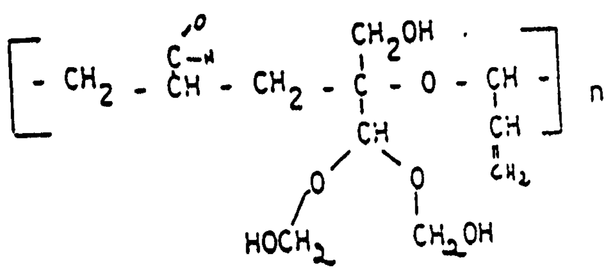

5. Process according to one of the claims 1 to 4, characterised in that an additional acetal content, in particular of dialdehyde-tetramethylacetal corresponding to the following general formula

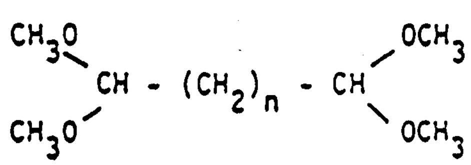

n = 1-3

is added to the composition.

**Revendications**

1. Produits antimicrobiens exempts de formaldéhyde ou de composés libérant du formaldéhyde et de dialdéhyde glutarique, à l'exception du glyoxal, à base de biocides connus et d'une combinaison de composés d'ammonium quaternaire, caractérisés en ce qu'ils contiennent des sels d'ammonium quaternaire de formules générales

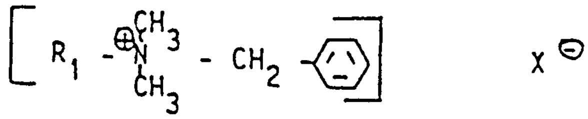

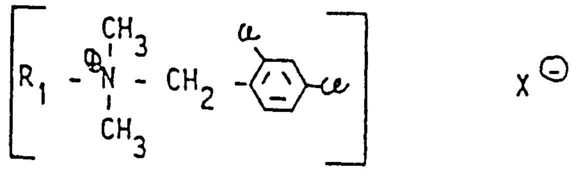

et

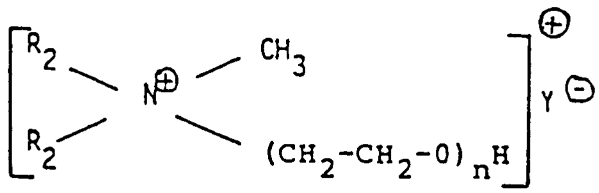

n = 1-5

dans lesquelles $R_1$ représente un groupe alkyle à chaîne carbonée à nombre pair d'atomes de carbone de $C_{12}$ à $C_{18}$, $R_2$ représente un groupe alkyle en $C_{10}$, $X^{\ominus}$ représente un radical d'acide minéral et $Y^{\ominus}$ un radical d'acide organique, et les produits contiennent en outre des combinaisons d'oxydes d'amines de formules générales

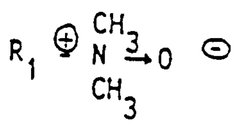

et/ou

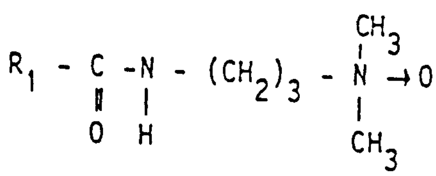

et d'éthers de polyglycol d'alcools gras de formule générale :

$R_2 - CH_2 - O(CH_2CH_2O)_nH$ n = 5 - 15

dans lesquelles $R_1$ représente un groupe alkyle à chaîne carbonée à nombre pair d'atomes de carbone de $C_{12}$ à $C_{18}$, $R_2$ représente un groupe isoalkyle en $C_{13}$ et n est le nombre des molécules d'oxyde d'éthylène fixé par addition sur l'acool gras et contiennent des polymères.

**2.** Produit antimicrobien selon la revendication 1, caractérisé en ce que le biocide connu est l'éthane-dial (glyoxal).

**3.** Produit antimicrobien selon la revendication 1, caractérisé en ce que les biocides connus sont des

dérivés du biguanide et/ou des dérivés de la diguanidine de formules générales respectives

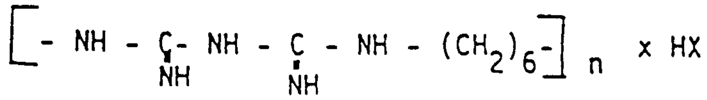

n = 4-6

et

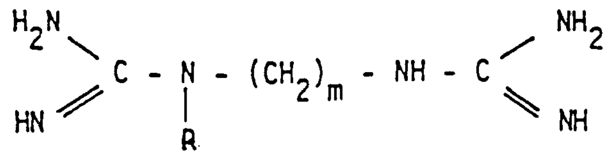

x 2 HY

m = 2-6

dans lesquelles R représente un groupe alkyle à chaîne carbonée à nombre pair d'atomes de carbone de $C_{12}$ à $C_{18}$, HX est un acide minéral et HY un acide organique.

**4.** Produit antimicrobien selon les revendications 1 à 3, caractérisé en ce que le polymère est un copolymère acroléine/ formaldéhyde de formule générale :

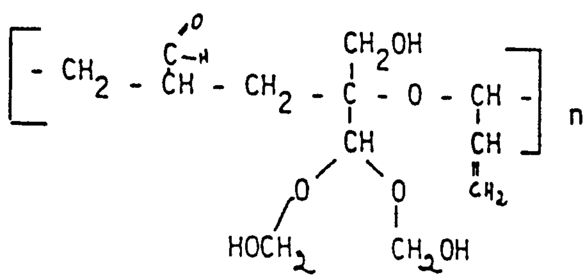

**5.** Produit antimicrobien selon les revendications 1 à 4, caractérisé en ce qu'il contient en outre des acétals, en particulier un tétraméthylacétal de dialdéhyde de formule générale :

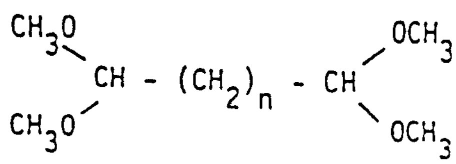

n = 1-3

**Revendications pour l'Etat contractant suivant : AT**

**1.** Procédé de préparation de produits antimicrobiens à base de biocides connus et d'une combinaison de composés d'ammonium quaternaire, mais exempts de formaldéhyde ou de composés libérant du formaldéhyde et de dialdéhyde glutarique, à l'exception du glyoxal, caractérisé en ce que l'on ajoute au mélange des composants mentionnés ci-dessus, en tant que composés d'ammonium quaternaire, des sels d'amminum de formules générales :

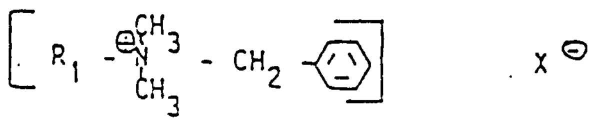

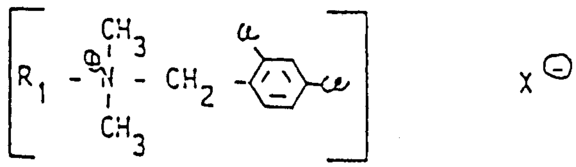

et

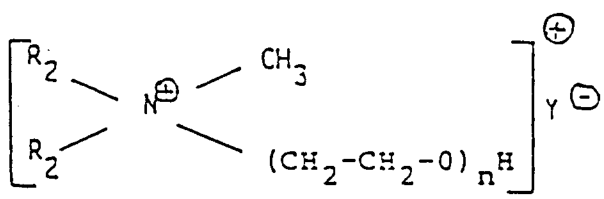

n = 1-5

dans lesquelles $R_1$ représente un groupe alkyle à chaîne carbonée à nombre pair d'atomes de carbone de $C_{12}$ à $C_{18}$, $R_2$ représente un groupe alkyle en $C_{10}$, $X^{\ominus}$ un radical d'acide minéral et $Y^{\ominus}$ un radical d'acide organique, et on ajoute en outre aux produits des combinaisons d'oxydes d'amines de formules générales :

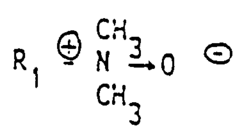

et/ou

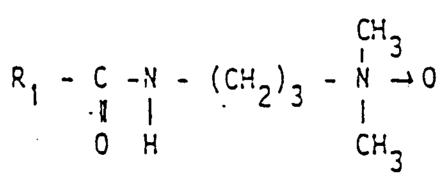

et d'éthers de polyglycol d'alcools gras de formule générale :

$R_2 - CH_2 - O(CH_2CH_2O)_nH \quad n = 5 - 15$

dans lesquelles $R_1$ représente un groupe alkyle à chaîne carbonée à nombre pair d'atomes de carbone de $C_{12}$ à $C_{18}$, $R_2$ représente un groupe isoalkyle en $C_{13}$ et n est le nombre des molécules d'oxyde d'éthylène fixé par addition sur l'alcool gras, et on ajoute encore un polymère et le cas échéant de l'eau.

**2.** Procédé selon la revendication 1, caractérisé en ce que le biocide connu qui est utilisé est l'éthane-dial (glyoxal).

3. Procédé selon la revendication 1, caractérisé en ce que les biocides connus qui sont utilisés sont des dérivés du biguanide et/ou des dérivés de la diguanidine de formules générales respectives

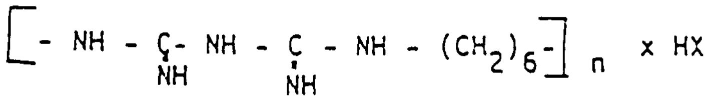

n = 4-6

et

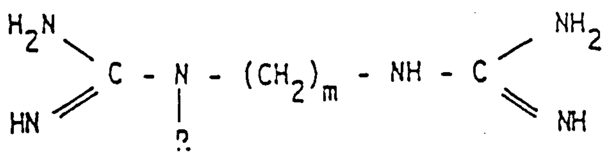

x 2 HY

m = 2-6

dans lesquelles R représente un groupe alkyle à chaîne carbonée à nombre pair d'atomes de carbone de $C_{12}$ à $C_{18}$, HX représente un acide minéral et HY un acide organique.

4. Procédé selon l'une des revendications 1 à 3, caractérisé en ce que le polymère utilisé est un copolymère acroléine/formaldéhyde de formule générale :

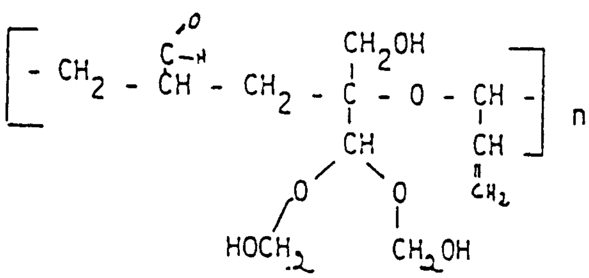

5. Procédé selon l'une des revendications 1 à 4, caractérisé en ce que l'on ajoute en outre aux produits des acétals, en particulier un tétraméthylacétal de dialdéhyde de formule générale :

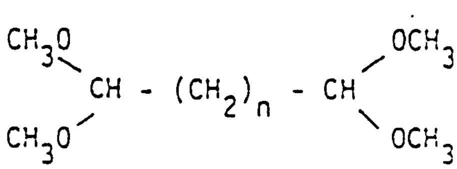

n = 1-3